# EUROPÄISCHE PATENTSCHRIFT

(11) **EP 1 512 311 B1**
(45) Veröffentlichungstag und Bekanntmachung des Hinweises auf die Patenterteilung: **12.10.2005**
(21) Anmeldenummer: 03757014.0
(22) Anmeldetag: 03.06.2003
(51) Int. Cl.: H04Q 11/04, H04L 12/28

(54) **VERFAHREN UND ZUGANGSMULTIPLEXER FÜR DEN SCHNELLEN ZUGANG ZU DATENNETZEN**
METHOD AND ACCESS MULTIPLEXER FOR QUICK ACCESS TO DATA NETWORKS
PROCEDE ET MULTIPLEXEUR D'ACCES PERMETTANT UN ACCES RAPIDE A DES RESEAUX DE DONNEES

(30) Priorität: 11.06.2002 EP 02012473
(43) Veröffentlichungstag der Anmeldung: 09.03.2005
(73) Patentinhaber: SIEMENS AKTIENGESELLSCHAFT, 80333 München (DE)
(72) Erfinder: KLAUSBERGER, Walter, A-3424 Wolfpassing (AT); SCHÜLER, Hartmut, 82064 Strasslach (DE)
(86) Internationale Anmeldenummer: PCT/EP2003/005806
(87) Internationale Veröffentlichungsnummer: WO 2003/105522

(56) Entgegenhaltungen:
- WO-A-01/06720
- WO-A-01/78310
- WO-A-02/19684
- WO-A-02/41578
- US-A1- 2002 021 702
- JESSUP T: "DSL: THE CORPORATE CONNECTION" DATA COMMUNICATIONS, MCGRAW HILL, Bd. 27, Nr. 2, 1. Februar 1998 (1998-02-01), Seiten 103-104,106,108, XP000731801 NEW YORK, US ISSN: 0363-6399

## Beschreibung

Für den schnellen Zugang zum Internet werden in zunehmendem Maße DSL-Verfahren (DSL=Digital Subscriber Line, digitale Teilnehmeranschlußleitung) und insbesondere asymmetrische DSL-Verfahren (ADSL=Asymmetric Digital Subscriber Line) eingesetzt. ADSL unterscheidet sich dabei von symmetrischen DSL-Verfahren (SDSL=Symmetric Digital Subscriber Line) im wesentlichen dadurch, daß bei ADSL verschiedene Übertragungsgeschwindigkeiten für Uplink (Übertragung vom Teilnehmer zum Internet) und Downlink (Übertragung vom Internet zum Teilnehmer) vorgesehen sind. Dabei ist regelmäßig die Downlink-Übertragungsgeschwindigkeit wesentlich (z.B. Faktor 4 oder 6) höher als die Uplink-Übertragungsgeschwindigkeit, da über den Downlink typischerweise mehr Daten pro Zeiteinheit übertragen werden als über den Uplink. Bei SDSL hingegen sind die Übertragungsgeschwindigkeiten für Downlink und Uplink gleich.

Im folgenden wird der Begriff "DSL" als Oberbegriff sowohl für "ADSL" als auch für "SDSL" verwendet, da die tatsächlichen Übertragungsgeschwindigkeiten und das Verhältnis der Übertragungsgeschwindigkeiten zwischen Uplink und Downlink für die vorliegende Erfindung nicht von Bedeutung sind.

Ein Datenendgerät des Teilnehmers, beispielsweise ein PC (PC=Personalcomputer) oder eine Settop-Box, wird mittels eines integrierten oder externen Modems über eine herkömmliche Kupferdoppelader mit einem DSLAM (DSLAM=DSL Access Multiplexer, DSL Zugangsmultiplexer) verbunden. Der DSLAM ist in einem Zugangsknoten des Netzbetreibers, der den Anschluss für den Teilnehmer bereitstellt, angeordnet. An einen DSLAM sind über entsprechende Schnittstellenbaugruppen des DSLAM typischerweise mehrere Teilnehmer angeschlossen.

In herkömmlichen DSL-Zugangsnetzen erfolgt die Anbindung des DSLAM an nachgeordnete Netzelemente mittels eines ATM-Netzwerkes (ATM=Asynchronous Transfer Mode, asynchroner Transfermodus).

Nachteilig ist dabei, daß ATM-Netzwerke sowohl beim Aufbau als auch im Betrieb teuer und aufwendig sind, da einerseits die Komponenten eines ATM-Netzwerkes (z.B. Switches) im Vergleich zu Komponenten, die andere Übertragungstechniken unterstützen, teuer sind und andererseits jede Verbindung eines ATM-Netzwerkes gesondert administriert werden muss.

Um diesen Nachteil zu umgehen, wird beispielsweise in "DSL: The Corporate Connection", T. Jessup, Data Communications Bd. 27, Nr. 2 (Februar 1998), S. 103-108, McGraw Hill, New York, vorgeschlagen, die DSL Zugangsleitungen mit ATM-Netzen, Ethernets, T1-Verbindungen, seriellen Leitungen oder Frame Relay zu verbinden.

Erfolgt die teilnehmerseitige Terminierung der Verbindung kostengünstig mittels Ethernet, besteht jedoch die Gefahr, dass aufgrund der Selbstkonfigurationsfähigkeiten der im Zusammenhang mit dem Zugangsmultiplexer DSLAM erforderlichen Ethernet-Bridge ein Angriff auf den DSLAM mit einer großen Anzahl gefälschter MAC-Adressen (MAC=Media Access Control) die Routing-Tabellen des DSLAM zum Überlauf bringt. Außerdem sind bei ungefiltertem Ethernet-Verkehr beispielsweise unautorisierte Verbindungen zwischen den Datenendgeräten D1, D2, D3 möglich.

Es ist daher eine Aufgabe der vorliegenden Erfindung, ein Verfahren und einen Zugangsmultiplexer für den schnellen Zugang zu Datennetzen anzugeben, durch welche Angriffe auf einen DSLAM verhindert und unautorisierte Direktverbindungen zwischen am DSLAM angeschlossenen Datenendgeräten unterbunden werden.

Diese Aufgabe wird durch ein Verfahren für den schnellen Zugang zu Datennetzen ausgehend vom Oberbegriff des Patentanspruchs 1 durch dessen kennzeichnende Merkmale und einen Zugangsmultiplexer für den schnellen Zugang zu Datennetzen ausgehend vom Oberbegriff des Patentanspruchs 7 durch dessen kennzeichnende Merkmale gelöst.

Bevorzugte Ausführungsformen sind Gegenstand der abhängigen Ansprüche.

Gemäß der vorliegenden Erfindung wird ein Verfahren für den schnellen Zugang zu Datennetzen INT vorgesehen, bei dem Datenendgeräte D1, D2, D3 von Teilnehmern mittels je eines Modems M1, M2, M3 über je eine digitale Teilnehmeranschlussleitung DSL1, DSL2, DSL3 mit einem Zugangsmultiplexer DSLAM verbunden sind, wobei zur Datenübertragung zwischen den Datenendgeräten D1, D2, D3 und einem dem Zugangsmultiplexer (DSLAM) nachgeordneten Zugriffsserver B-RAS, durch welchen die Zugriffsberechtigung der Datenendgeräte D1, D2, D3 überprüft und der Zugriff auf das Datennetz (INT) hergestellt wird, das Point-to-Point-Protocol over Ethernet PPPoE eingesetzt wird, wobei die Anbindung des Zugangsmultiplexers DSLAM an den Zugriffsserver B-RAS und an weitere nachgeordnete Komponenten mittels eines Ethernet-Netzwerkes ETH erfolgt. Dabei weist der Zugangsmultiplexer eine Ethernet-Bridge auf, die Filtermittel zum Auswerten der in empfangenen Ethernet-Rahmen enthaltenen PPPoE-Header aufweist, wobei:
- Ethernet-Rahmen an die Ethernet-Bridge (EB) weitergeleitet werden, wenn der PPPoE-Header einer bestehenden, durch den Zugriffsserver (B-RAS) bestätigten Verbindung zuordenbar ist oder wenn der PPPoE-Header einem Verbindungsaufbau zuordenbar ist, und
- alle anderen Ethernet-Rahmen, die einen PPPoE-Header enthalten, verworfen werden, und
- alle Ethernet-Rahmen, die keinen PPPoE-Header enthalten, verworfen werden.

Mit anderen Worten werden alle Ethernet-Rahmen verworfen, die nicht einer bestehenden PPPoE-Verbindung oder einem PPPoE-Verbindungsaufbau zuordenbar sind.

Gemäß der vorliegenden Erfindung wird außerdem ein Zugangsmultiplexer DSLAM für den schnellen Zugang zu Datennetzen INT vorgesehen, an den Datenendgeräte D1, D2, D3 von Teilnehmern mittels je eines Modems M1, M2, M3 über je eine digitale Teilnehmeranschlussleitung DSL1, DSL2, DSL3 angeschlossen sind, wobei zur Datenübertragung zwischen den Datenendgeräten D1, D2, D3 und einem Zugriffsserver B-RAS, durch welchen die Zugriffsberechtigung der Datenendgeräte D1, D2, D3 überprüft und der Zugriff auf das Datennetz (INT) hergestellt wird, das Point-to-Point-Protocol over Ethernet PPPoE eingesetzt wird, wobei der Zugangsmultiplexer DSLAM mit dem Zugriffsserver (B-RAS) und mit weiteren nachgeordneten Komponenten mittels eines Ethernet-Netzwerkes (ETH) verbunden ist und wobei der Zugangsmultiplexer die o.g. Ethnernet-Bridge und Filtermittel aufweist.

Ein wichtiger Vorteil des erfindungsgemäßen Verfahrens und des erfindungsgemäßen Zugangsmultiplexers DSLAM besteht darin, dass der Aufbau eines Ethernet-Netzwerkes erheblich kostengünstiger ist als der Aufbau eines ATM-Idetzwerkes, da Ethernet-Komponenten einfacher und damit kostengünstig herstellbar sind. Wartung und Betrieb eines Ethernet-Netzwerkes sind ebenfalls deutlich kostengünstiger, da ein Ethernet-Netzwerk selbstkonfigurierend ist und somit die bei ATM-Netzwerken erforderliche Administration des Netzwerkes entfällt. Dabei wird durch die Erfindung verhindert, daß Angriffe auf einen DSLAM z.B. mittels gefälschter MAC-Adressen ausgeführt werden können und daß unautorisierte Direktverbindungen zwischen am DSLAM angeschlossenen Datenendgeräten aufgebaut werden können.

Vorteilhaft bleibt bei Anwendung der Erfindung die herkömmliche Anbindung der Datenendgeräte der Teilnehmer an den Zugangsmultiplexer bestehen.

In einer Weiterbildung des erfindungsgemäßen Verfahrens und des erfindungsgemäßen Zugangsmultiplexers wird eine Kombination mit einem Verfahren bzw. Mitteln zur Überlastabwehr vorgesehen - Ansprüche 3 bis 5 und 9 bis 11. Der Vorzug dieser Kombination besteht darin, dass starke Impulse bzw. Bursts von Datenverkehr auf der hochbitratigen Ethernet-Schnittstelle, die an nur eine der - im Vergleich zu der Ethernet-Schnittstelle niederbitratigen -digitalen Teilnehmeranschlussleitungen weiterzuleiten sind, dort nicht zu einer Überlastsituation führen können, da erforderlichenfalls Ethernet-Rahmen bereits aus dem Empfangspuffer der Ethernet-Schnittstelle verworfen werden. Vorteilhaft werden Ethernet-Rahmen, die der Verbindungssteuerung dienen, von der Verwurfsstrategie ausgenommen.

Im folgenden wird das erfindungsgemäße Verfahren im Zusammenhang mit einer Zeichnung als Ausführungsbeispiel näher erläutert.

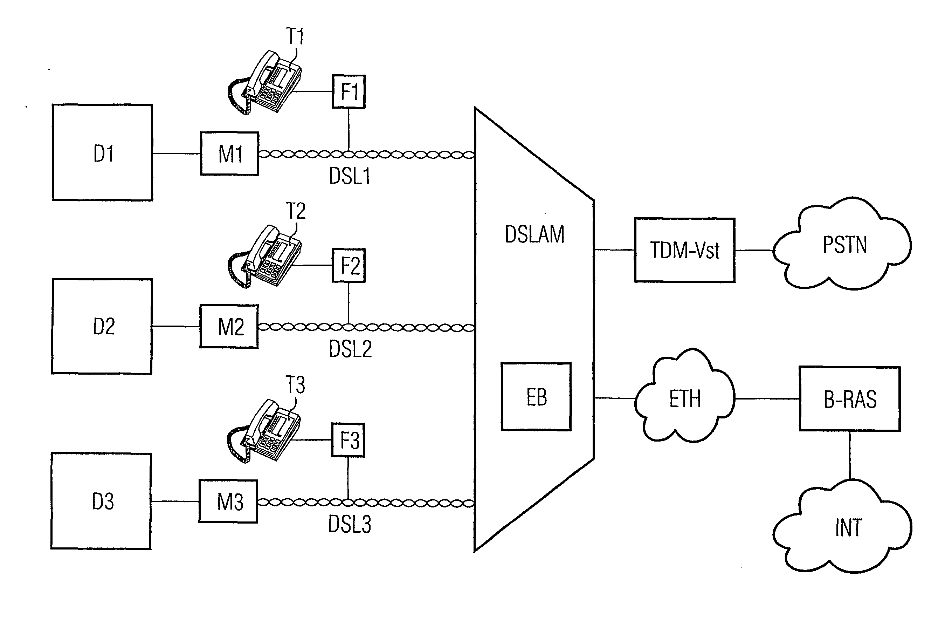

Die einzige Figur 1 zeigt schematisch den Netzaufbau für einen schnellen Zugang zu einem Datennetz mittels digitaler Teilnehmeranschlussleitung.

Figur 1 zeigt drei Datenendgeräte D1, D2, D3, mittels je eines Modems M1, M2, M3 über je eine digitale Teilnehmeranschlussleitung DSL1, DSL2, DSL3 mit einem Zugangsmultiplexer DSLAM verbunden sind. Typischerweise werden herkömmliche (Kupfer)Telefonleitungen für den schnellen Zugang zum Internet INT mittels digitaler Teilnehmeranschlussleitung DSL verwendet, über die gleichzeitig herkömmliche analoge oder digitale Telefoniedienste abgewickelt werden. Dies erfordert teilnehmerseitig jeweils ein Splitter bzw. Filter F1, F2, F3 zum Anschluß jeweils eines Telefonieendgerätes T1, T2, T3. Obgleich eine Kopplung der digitalen Teilnehmeranschlussleitung DSL mit herkömmlichen Telefoniediensten üblich ist, kann die vorliegende Erfindung auch für DSL-Verfahren eingesetzt werden, die diese Kopplung nicht vorsehen.

Der Zugangsmultiplexer DSLAM trennt Telefonie- und Datendienste und leitet die Telefoniedienste beispielsweise über eine herkömmliche Vermittlungsstelle TDM-Vst (TDM=Time Division Multiplex, zeitmultiplex) in das öffentliche Telefonnetz PSTN (PSTM=Public Switched Telephony Network). Die Datendienste werden erfindungsgemäß über ein Ethernet-Netzwerk ETH an einen Zugriffsserver B-RAS (B-RAS=Broadband Remote Access Server, Breitband-Fernzugriffsserver) und von dort in das Internet INT weitergeleitet.

Zum Datenaustausch zwischen dem Zugriffsserver B-RAS und einem der Datenendgeräte D1, D2, D3 wird das Protokoll PPPoE (PPPoE=Point-to-Point Protocol over Ethernet, Punkt-zu-Punkt-Protokoll über Ethernet) verwendet, welches PPP-Daten (PPP=Point-to-Point Protocol, Punkt-zu-Punkt-Protokoll) transportiert, welches wiederum IP-Daten (IP=Internetprotokoll) befördert.

Die PPPoE-Daten werden zwischen Datenendgerät D und Modem M in den meisten Fällen mittels Ethernet übertragen. Andere Übertragungsverfahren zwischen Datenendgerät D und Modem M sind beispielsweise ATM oder USB-Protokoll (USB=Universal Serial Bus). Die Übertragung zwischen Modem M und Zugangsmultiplexer DSLAM erfolgt mittels ATM.

Da erfindungsgemäß der weitere Transport nicht - wie bisher üblich - über ATM, sondern über Ethernet erfolgt, werden die PPPoE-Daten im Zugangsmultiplexer rückgewonnen und zur Übertragung über das Ethernet-Netzwerk ETH in Ethernet-Rahmen gekapselt, d.h. der bereits vorhandenen Ethernet-Header wird um eine Prüfsumme und eine Anfangskennung ergänzt.

Der Zugangsmultiplexer DSLAM weist hierfür eine Ethernet-Bridge EB auf, die zum Schutz vor Denial-of-Service-Angriffen und unautorisiertem Zugang Filtermittel aufweist. Erfolgt die teilnehmerseitige Terminierung der Verbindung kostengünstig mittels Ethernet, besteht die Gefahr, daß aufgrund der Selbstkonfigurationsfähigkeiten der Ethernet-Bridge EB ein Angriff auf den DSLAM mit einer großen Anzahl gefälschter MAC-Adressen die Routing-Tabellen des DSLAM zum Überlauf bringt. Außerdem sind bei ungefiltertem Ethernet-Verkehr beispielsweise unautorisierte Verbindungen zwischen den Datenendgeräten D1, D2, D3 möglich. Dabei werden folgende Filterregeln angewendet:
- Ethernet-Rahmen werden an die Ethernet-Bridge (EB) weitergeleitet, wenn der PPPoE-Header einer bestehenden, durch den Zugriffsserver (B-RAS) bestätigten Verbindung zuordenbar ist, oder wenn der PPPoE-Header einem Verbindungsaufbau zuordenbar ist, wobei mit dem Verbindungsaufbau ein Timer gestartet wird, bei dessen Ablauf die MAC-Adresse der sendenden Ethernet-Komponente aus den Routing-Tabellen der Ethernet-Bridge (EB) entfernt werden, sofern vor Ablauf des Timers keine Bestätigung des Verbindungsaufbaus durch den Zugriffsserver (B-RAS) erfolgt, und
- alle anderen Ethernet-Rahmen, die einen PPPoE-Header enthalten, werden verworfen, und
- alle Ethernet-Rahmen, die keinen PPPoE-Header enthalten, werden verworfen.

Durch diese Filterung sind die genannten Angriffe bzw. unautorisierten Zugriffe effektiv unterbunden.

Aufgrund der verschiedenen Übertragungsgeschwindigkeiten der teilnehmerseitigen Schnittstellen DSL1, DSL2, DSL3 (derzeit maximal 8 MBit/s, üblich z.B. 1,5 MBit/s oder 768 kBit/s oder 512 kBit/s) und der netzseitigen Ethernet-Schnittstelle bzw. Ethernet-Schnittstellen (derzeit maximal 1 GBit/s, üblich z.B. 100 MBit/s) des Zugangsmultiplexers DSLAM können in Übertragungsrichtung zum Datenendgerät D eines Teilnehmers Situationen eintreten, in denen Daten über die Ethernet-Schnittelle(n) mit maximaler Übertragungsgeschwindigkeit (z.B. 100 MBit/s) für eine einzige digitale Teilnehmeranschlussleitung DSL geliefert werden, über die ein Weitertransport der Daten nur mit wesentlich geringerer Übertragungsgeschwindigkeit (z.B. 768 kBit/s) möglich ist. Dies kann aufgrund des auf ATM basierenden Übertragungsverfahrens auf der digitalen Teilnehmeranschlussleitung DSL dazu führen, dass trotz voll ausgelasteter Übertragungsstrecke zwischen Zugangsmultiplexer DSLAM und Modem M der Nutzdatenverkehr zwischen Zugangsmultiplexer DSLAM und Datenendgerät D völlig zum Erliegen kommt.

Dies wird dadurch hervorgerufen, dass aus einem Empfangspuffer der Ethernet-Schnittstelle(n) des DSLAM mit hoher Datenrate bzw. Übertragungsgeschwindigkeit Daten in Form von Ethernet-Rahmen oder PPPoE-Rahmen an einen Sendepuffer der ATM-Schnittstelle der digitalen Teilnehmeranschlussleitung DSL geliefert werden. Da Ethernet-Rahmen bzw. PPPoE-Rahmen typischerweise wesentlich größer sind als ATM-Zellen, ist eine Aufteilung der Rahmen auf mehrere ATM-Zellen, die je 48 Byte Nutzdaten befördern können, erforderlich. Dieser Vorgang ist bekannt als Segmentation. Durch Verwurfsstrategien im Sendepuffer der ATM-Schnittstelle kann nun der Fall eintreten, dass aus jedem zu übertragenden Rahmen eine oder mehrere dieser ATM-Zellen verworfen werden, was dazu führt, dass die Rahmen unvollständig übertragen, im Ziel verworfen und neu angefordert werden.

Um eine derartige Blockierung zu vermeiden, wird in einer vorteilhaften Weiterbildung der Erfindung ein Mechanismus vorgesehen, der durch eine Random Early Discard Strategie (RED=Random Early Discard, frühzeitiger zufälliger Verwurf), die bereits im Empfangspuffer der Ethernet-Schnittstelle angewendet wird, Überlastsituationen bereits vor deren Entstehen zuverlässig vermeidet. Andere Verwurfsstrategien als RED sind ebenfalls anwendbar, beispielsweise Verwurf basierend auf Rahmengröße oder Prioritätsinformationen.

Um den Verwurf von Rahmen im Empfangspuffer der Ethernet-Schnittstelle zu steuern, wird durch eine entsprechende Logik der Zustand der Sendepuffer ATM-Schnittstellen der digitalen Teilnehmeranschlussleitungen DSL1, DSL2, DSL3 überwacht. Sobald festgestellt wird, daß die Anzahl der pro Zeiteinheit über den Empfangspuffer eingehenden Rahmen für einen der Sendepuffer der ATM-Schnittstellen die Anzahl der dort pro Zeiteinheit abgehenden Rahmen um einen gemäß der Puffergrößen festzulegenden Wert übersteigt, werden Ethernet-Rahmen, die zu jenem Sendepuffer zu übermitteln sind, aus dem Empfangspuffer der Ethernet-Schnittstelle verworfen. Dazu ist es erforderlich, dass im Empfangspuffer der Ethernet-Schnittstelle bereits festgestellt wird, wohin eingehende Rahmen übermittelt werden sollen, d.h. eine erste Auswertung der Zieladresse ist bereits vor dem eigentlichen Routing eines Rahmens durchzuführen.

Liegt die Zahl der pro Zeiteinheit aus dem Sendepuffer abgehenden Rahmen, beispielsweise aufgrund starker Übertragungsstörungen auf der digitalen Teilnehmeranschlussleitung, unterhalb eines festzulegenden ersten Schwellwertes, werden alle für diesen Sendepuffer eingehenden Rahmen verworfen. Liegt die Zahl die Zahl der pro Zeiteinheit aus dem Sendepuffer abgehenden Rahmen oberhalb des ersten, jedoch unterhalb eines festzulegenden zweiten Schwellwertes, werden Rahmen je nach gewählter Verwurfsstrategie entweder zufällig oder gemäß festzulegender Kriterien verworfen. Als Kriterien kommen beispielsweise Prioritätsinformationen der übermittelten Rahmen oder die Rahmenlänge in Betracht. Weitere Schwellwerte können definiert werden, um eine hinreichend feine Justierung der Verwurfsstrategie zu ermöglichen, beispielsweise um eine größere Anzahl von Prioritätswerten zu unterstützen. Im einfachsten Fall entspricht bereits der zweite Schwellwert der maximalen Datenrate der digitalen Teilnehmeranschlussleitung DSL, d.h. falls die Zahl der pro Zeiteinheit für eine spezielle digitale Teilnehmeranschlussleitung DSL im DSLAM eingehenden Rahmen größer als die Zahl der mit der maximalen Datenrate der digitalen Teilnehmeranschlussleitung DSL abgehenden Rahmen, werden Rahmen entsprechend der gewählten Verwurfsstrategie verworfen.

Der Verwurf von Ethernet-Rahmen ist für die Datenübertragung insofern unkritisch, als daß höhere Protokollschichten, beispielsweise das Transmission Control Protocol TCP, die Übertragung überwachen und die erneute Übertragung verlorener Informationen veranlassen.

Gemäß einer Weiterbildung der Erfindung werden Rahmen, die der Verbindungssteuerung dienen, nicht verworfen.

Obwohl die Erfindung mit Bezug auf DSL Zugangsmultiplexer DSLAM beschrieben wurde, sind das erfindungsgemäße Verfahren und der erfindungsgemäße Zugangsmultiplexer auch auf andere Verfahren für den schnellen Zugang zu Datennetzen anwendbar, bei denen die Anbindung des Zugangsmultiplexers an nachgeordnete Komponenten mittels eines kostengünstigen Ethernet-Netzwerkes erfolgt.

## Patentansprüche

1. Verfahren für den schnellen Zugang zu Datennetzen (INT), bei dem Datenendgeräte (D1, D2, D3) von Teilnehmern mittels je eines Modems (M1, M2, M3) über je eine digitale Teilnehmeranschlussleitung (DSL1, DSL2, DSL3) mit einem Zugangsmultiplexer (DSLAM) verbunden sind, wobei zur Datenübertragung zwischen den Datenendgeräten (D1, D2, D3) und einem dem Zugangsmultiplexer (DSLAM) nachgeordneten Zugriffsserver (B-RAS), durch welchen die Zugriffsberechtigung der Datenendgeräte (D1, D2, D3) überprüft und der Zugriff auf das Datennetz (INT) hergestellt wird, das Point-to-Point-Protocol over Ethernet PPPoE eingesetzt wird, und wobei die Anbindung des Zugangsmultiplexers (DSLAM) an den Zugriffsserver (B-RAS) und an weitere nachgeordnete Komponenten mittels eines Ethernet-Netzwerkes (ETH) erfolgt,
**dadurch gekennzeichnet,**
**dass** eine Ethernet-Bridge (EB) dem Zugangsmultiplexer (DSLAM) zugeordnet oder in den Zugangsmultiplexer (DSLAM) integriert wird, wobei die Ethernet-Bridge (EB) mit Filtermitteln ausgerüstet wird, durch welche die in empfangenen Ethernet-Rahmen enthaltenen PPPoE-Header ausgewertet werden und wobei:
- Ethernet-Rahmen an die Ethernet-Bridge (EB) weitergeleitet werden, wenn der PPPoE-Header einer bestehenden, durch den Zugriffsserver (B-RAS) bestätigten Verbindung zuordenbar ist oder wenn der PPPoE-Header einem Verbindungsaufbau zuordenbar ist und
- alle anderen Ethernet-Rahmen, die einen PPPoE-Header enthalten, verworfen werden, und
- alle Ethernet-Rahmen, die keinen PPPoE-Header enthalten, verworfen werden.

2. Verfahren nach Anspruch 1,
**dadurch gekennzeichnet,**
**dass** mit dem Verbindungsaufbau ein Timer gestartet wird, bei dessen Ablauf die MAC-Adresse der sendenden Ethernet-Komponente aus den Routing-Tabellen der Ethernet-Bridge (EB) entfernt wird, sofern vor Ablauf des Timers keine Bestätigung des Verbindungsaufbaus durch den Zugriffsserver (B-RAS) erfolgt.

3. Verfahren nach einem der Ansprüche 1 oder 2,
**dadurch gekennzeichnet,**
**dass** für die Datenübertragungsrichtung zum Datenendgerät (D1, D2, D3) hin in einem Empfangspuffer einer Ethernet-Schnittstelle, durch welche der Zugangsmultiplexer (DSLAM) mit dem Ethernet-Netzwerk (ETH) verbunden wird, basierend auf dem Lastzustand von Sendepuffern, die den digitalen Teilnehmeranschlussleitungen (DSL1, DSL2, DSL3) zugeordnet sind, zufällig oder gezielt ausgewählt Ethernet-Rahmen verworfen werden.

4. Verfahren nach Anspruch 3,
**dadurch gekennzeichnet,**
**dass** der jeweiligen digitalen Teilnehmeranschlussleitung (DSL1, DSL2, DSL3) zuzuordnende Ethernet-Rahmen verworfen werden, falls durch eine Steuerlogik eine Überlast des Sendepuffers der digitalen Teilnehmeranschlussleitung (DSL1, DSL2, DSL3) prognostiziert wird.

5. Verfahren nach einem der Ansprüche 3 oder 4,
**dadurch gekennzeichnet,**
**dass** anhand ihres Ethernet-Header erkennbare Verbindungssteuerrahmen nicht verworfen werden.

6. Verfahren nach einem der Ansprüche 1 bis 5,
**dadurch gekennzeichnet,**
**dass** das Datennetz (INT) das Internet ist.

7. Zugangsmultiplexer (DSLAM) für den schnellen Zugang zu Datennetzen (INT), an den Datenendgeräte (D1, D2, D3) von Teilnehmern mittels je eines Modems (M1, M2, M3) über je eine digitale Teilnehmeranschlussleitung (DSL1, DSL2, DSL3) angeschlossen sind, wobei zur Datenübertragung zwischen den Datenendgeräten (D1, D2, D3) und einem dem Zugangsmultiplexer (DSLAM) nachgeordneten Zugriffsserver (B-RAS), durch welchen die Zugriffsberechtigung der Datenendgeräte (D1, D2, D3) überprüft und der Zugriff auf das Datennetz (INT) hergestellt wird, das Point-to-Point-Protocol over Ethernet PPPoE eingesetzt wird, und wobei der Zugangsmultiplexer (DSLAM) mit dem Zugriffsserver (B-RAS) und mit weiteren nachgeordneten Komponenten mittels eines Ethernet-Netzwerkes (ETH) verbunden ist,
**dadurch gekennzeichnet,**
**dass** der Zugangsmultiplexer eine Ethernet-Bridge (EB) aufweist, wobei die Ethernet-Bridge (EB) Filtermittel zum Auswerten der in empfangenen Ethernet-Rahmen enthaltenen PPPoE-Header aufweist, und wobei:
- Ethernet-Rahmen an die Ethernet-Bridge (EB) weitergeleitet werden, wenn der PPPoE-Header einer bestehenden, durch den Zugriffsserver (B-RAS) bestätigten Verbindung zuordenbar ist oder wenn der PPPoE-Header einem Verbindungsaufbau zuordenbar ist, und
- alle anderen Ethernet-Rahmen, die einen PPPoE-Header enthalten, verworfen werden, und
- alle Ethernet-Rahmen, die keinen PPPoE-Header enthalten, verworfen werden.

8. Zugangsmultiplexer (DSLAM) nach Anspruch 7, der zusätzlich einen Timer aufweist, der mit dem Verbindungsaufbau gestartet wird, bei dessen Ablauf die MAC-Adresse der sendenden Ethernet-Komponente aus den Routing-Tabellen der Ethernet-Bridge (EB) entfernt wird, sofern vor Ablauf des Timers keine Bestätigung des Verbindungsaufbaus durch den Zugriffsserver (B-RAS) erfolgt.

9. Zugangsmultiplexer (DSLAM) nach einem der Ansprüche 7 oder 8,
**dadurch gekennzeichnet,**
**dass** der Zugangsmultiplexer (DSLAM) Mittel zur Überlastabwehr für die Datenübertragungsrichtung zum Datenendgerät (D1, D2, D3) hin aufweist, die Mittel zur Überwachung eines Empfangspuffers einer Ethernet-Schnittstelle, durch welche der Zugangsmultiplexer (DSLAM) mit dem Ethernet-Netzwerk (ETH) verbunden wird, sowie Mittel zur Überwachung des Lastzustandes von Sendepuffern, die den digitalen Teilnehmeranschlussleitungen (DSL1, DSL2, DSL3) zugeordnet sind, sowie Mittel zum zufälligen oder gezielten Auswählen und Verwerfen von Ethernet-Rahmen verworfen umfassen.

10. Zugangsmultiplexer (DSLAM)nach Anspruch 9,
**dadurch gekennzeichnet,**
**dass** der Zugangsmultiplexer (DSLAM) eine Steuerlogik aufweist mit Mitteln zur Prognostizierung einer Überlast des Sendepuffers der digitalen Teilnehmeranschlussleitung (DSL1, DSL2, DSL3) und Mitteln zur Beeinflussung des Empfangspuffers zum Verwerfen von Ethernet-Rahmen, die der jeweiligen digitalen Teilnehmeranschlussleitung (DSL1, DSL2, DSL3) zuzuordnen sind.

11. Zugangsmultiplexer (DSLAM)nach einem der Ansprüche 9 oder 10,
**dadurch gekennzeichnet,**
**dass** die Steuerlogik des Zugangsmultiplexers (DSLAM) Mittel zum Identifizieren von Verbindungssteuerrahmen anhand deren Ethernet-Header und Mittel zur Beeinflussung des Empfangspuffers aufweist, so dass Verbindungssteuerrahmen nicht verworfen werden.

## Claims

1. Method for quick access to data networks (INT), in which data terminal devices (D1, D2, D3) of subscribers are each connected by means of a modem (M1, M2, M3) respectively by way of a digital subscriber line (DSL1, DSL2, DSL3) respectively to an access multiplexer (DSLAM), whereby for the purposes of data transfer between the data terminal devices (D1, D2, D3) and an access server (B-RAS) which is located downstream of the access multiplexer (DSLAM), which serves to check the access authorisation of the data terminal devices (D1, D2, D3) and establish the access to the data network (INT), the Point-to-Point Protocol over Ethernet PPPoE is used, and whereby the link from the access multiplexer (DSLAM) to the access server (B-RAS) and to further components located downstream is implemented by means of an Ethernet network (ETH)
**characterised in that**
an Ethernet bridge (EB) is assigned to the access multiplexer (DSLAM) or is integrated into the access multiplexer (DSLAM), whereby the Ethernet bridge (EB) is equipped with filtering facilities through which the PPPoE headers contained in received Ethernet frames are evaluated and whereby:
- Ethernet frames are routed to the Ethernet bridge (EB) if the PPPoE header can be assigned to an existing connection confirmed by the access server, or if the PPPoE header can be assigned to connection which is set up, and
- all other Ethernet frames which contain a PPPoE header are discarded, and
- all Ethernet frames which do not contain a PPPoE header are discarded.

2. Method according to Claim 1,
**characterised in that**
a timer is started when the connection is set up and when the timer times out the MAC address of the sending Ethernet component is removed from the routing tables of the Ethernet bridge (EB) provided that no confirmation of the connection set-up is given by the access server (B-RAS) before the timer times out.

3. Method according to one of Claims 1 or 2,
**characterised in that**
Ethernet frames are discarded randomly or specifically selected for the data transfer direction toward the data terminal device (D1, D2, D3) in a receive buffer of an Ethernet interface through which the access multiplexer (DSLAM) is connected to the Ethernet network (ETH), on the basis of the load status of send buffers which are assigned to the digital subscriber lines (DSL1, DSL2, DSL3).

4. Method according to Claim 3,
**characterised in that**
Ethernet frames to be assigned to the respective digital subscriber line (DSL1, DSL2, DSL3) are discarded if a send buffer overload condition on the digital subscriber line (DSL1, DSL2, DSL3) is predicted by a control logic circuit.

5. Method according to one of Claims 3 or 4,
**characterised in that**
connection control frames which can be recognised on the basis of their Ethernet header are not discarded.

6. Method according to one of Claims 1 to 5,
**characterised in that**
the data network (INT) is the Internet.

7. Access multiplexer (DSLAM) for quick access to data networks (INT), to which data terminal devices (D1, D2, D3) of subscribers are each connected by means of a modem (M1, M2, M3) respectively by way of a digital subscriber line (DSL1, DSL2, DSL3) respectively, whereby for the purposes of data transfer between the data terminal devices (D1, D2, D3) and an access server (B-RAS) which is located downstream of the access multiplexer (DSLAM), which serves to check the access authorisation of the data terminal devices (D1, D2, D3) and establish the access to the data network (INT), the Point-to-Point Protocol over Ethernet PPPoE is used, and whereby the access multiplexer (DSLAM) is connected to the access server (B-RAS) and to further components located downstream by means of an Ethernet network (ETH),
**characterised in that**
the access multiplexer has an Ethernet bridge (EB), whereby the Ethernet bridge (EB) has filtering facilities for evaluating the PPPoE headers contained in received Ethernet frames, and whereby:
- Ethernet frames are routed to the Ethernet bridge (EB) if the PPPoE header can be assigned to an existing connection confirmed by the access server, or if the PPPoE header can be assigned to connection which is set up, and
- all other Ethernet frames which contain a PPPoE header are discarded, and
- all Ethernet frames which do not contain a PPPoE header are discarded.

8. Access multiplexer (DSLAM) according to Claim 7, additionally comprising a timer which is started when the connection is set up and when the timer times out the MAC address of the sending Ethernet component is removed from the routing tables of the Ethernet bridge (EB) provided that no confirmation of the connection set-up is given by the access server (B-RAS) before the timer times out.

9. Access multiplexer (DSLAM) according to one of Claims 7 or 8,
**characterised in that**
the access multiplexer (DSLAM) has means offering overload protection for the data transfer direction toward the data terminal device (D1, D2, D3), which comprise means for monitoring a receive buffer of an Ethernet interface through which the access multiplexer (DSLAM) is connected to the Ethernet network (ETH), as well as means for monitoring the load status of send buffers which are assigned to the digital subscriber lines (DSL1, DSL2, DSL3), and also means for the random or specific selection and discard of Ethernet frames.

10. Access multiplexer (DSLAM) according to Claim 9,
**characterised in that**
the access multiplexer (DSLAM) has a control logic circuit with means for predicting an overload condition for the send buffer of the digital subscriber line (DSL1, DSL2, DSL3) and means for influencing the receive buffer in order to discard Ethernet frames which are to be assigned to the respective digital subscriber line (DSL1, DSL2, DSL3).

11. Access multiplexer (DSLAM) according to one of Claims 9 or 10,
**characterised in that**
the control logic circuit of the access multiplexer (DSLAM) has means for the identification of connection control frames on the basis of their Ethernet header and means for influencing the receive buffer such that connection control frames are not discarded.

## Revendications

1. Procédé pour l'accès rapide à des réseaux de données (INT), dans lequel des terminaux de données (D1, D2, D3) d'abonnés sont reliés au moyen de respectivement un modem (M1, M2, M3) via respectivement une ligne d'abonné numérique (DSL1, DSL2, DSL3) à un multiplexeur d'accès (DSLAM), le Point-to-Point-Protocol over Ethernet PPPoE étant utilisé pour la transmission de données entre les terminaux de données (D1, D2, D3) et un serveur d'accès (B-RAS) placé en aval du multiplexeur d'accès (DSLAM), par lequel l'autorisation d'accès des terminaux de données (D1, D2, D3) est contrôlée et l'accès au réseau de données (INT) est établi, et le rattachement du multiplexeur d'accès (DSLAM) au serveur d'accès (B-RAS) et à d'autres composants placés en aval s'effectuant au moyen d'un réseau Ethernet (ETH),
**caractérisé en ce que**,
un Ethernet-Bridge (EB) est attribué au multiplexeur d'accès (DSLAM) ou est intégré dans le multiplexeur d'accès (DSLAM), le Ethernet-Bridge (EB) étant équipé de moyens de filtrage, par lesquels les PPPoE-Header contenues dans des trames Ethernet reçues sont analysées et dans lequel :
- des trames Ethernet sont transmises au Ethernet-Bridge (EB) lorsque la PPPoE-Header peut être attribuée à une liaison existante et confirmée par le serveur d'accès (B-RAS) ou lorsque la PPPoE-Header peut être attribuée à un établissement de liaison et
- toutes les autres trames Ethernet, qui contiennent une PPPoE-Header, sont rejetées, et
- toutes les trames Ethernet, qui ne contiennent pas une PPPoE-Header, sont rejetées.

2. Procédé selon la revendication 1,
**caractérisé en ce que**,
avec l'établissement de liaison, on démarre une horloge de minuterie, lors de l'arrêt de laquelle l'adresse MAC du composant Ethernet émetteur est enlevée des tables de routine du Ethernet-Bridge (EB), dans la mesure où, avant l'arrêt de l'horloge, on n'a pas de confirmation de l'établissement de la liaison par le serveur d'accès (B-RAS).

3. Procédé selon l'une quelconque des revendications 1 ou 2,
**caractérisé en ce que**,
pour la transmission de données en direction du terminal de données (D1, D2, D3) dans un tampon de réception d'une interface Ethernet, par laquelle le multiplexeur d'accès (DSLAM) est relié au réseau Ethernet (ETH), sur la base de l'état de charge de tampons d'émission qui sont attribués aux lignes d'abonnés numériques (DSL1, DSL2, DSL3), des trames Ethernet choisies de façon aléatoire ou ciblée sont rejetées.

4. Procédé selon la revendication 3,
**caractérisé en ce que**,
des trames Ethernet à attribuer à la ligne d'abonné numérique respective (DSL1, DSL2, DSL3) sont rejetées si une surcharge du tampon d'émission de la ligne d'abonné numérique (DSL1, DSL2, DSL3) est prévue par une logique de commande.

5. Procédé selon l'une quelconque des revendications 3 ou 4,
**caractérisé en ce que**,
des trames de commande de liaison pouvant être reconnues à l'aide de leur Ethernet-Header ne sont pas rejetées.

6. Procédé selon l'une quelconque des revendications 1 à 5,
**caractérisé en ce que**,
le réseau de données (INT) est l'Internet.

7. Multiplexeur d'accès (DSLAM) pour l'accès rapide à des réseaux de données (INT), auxquels des terminaux de données (D1, D2, D3) d'abonnés sont raccordés au moyen respectivement d'un modem (M1, M2, M3) via respectivement une ligne d'abonné numérique (DSL1, DSL2, DSL3), le Point-to-Point Protocol over Ethernet PPPoE étant utilisé pour la transmission de données entre les terminaux de données (D1, D2, D3) et un serveur d'accès (B-RAS) placé en aval du multiplexeur d'accès (DSLAM), par lequel l'autorisation d'accès des terminaux de données (D1, D2, D3) est contrôlée et l'accès au réseau de données (INT) est établi, et dans lequel le multiplexeur d'accès (DSLAM) est relié au serveur d'accès (B-RAS) et à d'autres composants placés en aval au moyen d'un réseau Ethernet (ETH),
**caractérisé en ce que**,
le multiplexeur d'accès présente un Ethernet-Bridge (EB), l'Ethernet-Bridge (EB) présentant des moyens de filtrage pour l'analyse des PPPoE-Header contenues dans des trames Ethernet reçues, et dans lequel :
- les trames Ethernet sont transmises à l'Ethernet-Bridge (EB) lorsque la PPPoE-Header peut être attribuée à une liaison existante et confirmée par le serveur d'accès (B-RAS) ou lorsque la PPPoE-Header peut être attribuée à un établissement de liaison, et
- toutes les autres trames Ethernet, qui contiennent une PPPoE-Header, sont rejetées, et
- toutes les trames Ethernet, qui ne contiennent pas de PPPoE-Header, sont rejetées.

8. Multiplexeur d'accès (DSLAM) selon la revendication 7, qui présente en supplément une horloge de minuterie, qui est démarrée avec l'établissement de la liaison, lors de l'arrêt de laquelle l'adresse MAC du composant Ethernet émetteur est enlevée des tableaux de routine du Ethernet-Bridge (EB), dans la mesure où, avant l'arrêt de l'horloge, on n'a pas de confirmation de l'établissement de la liaison par le serveur d'accès (B-RAS).

9. Multiplexeur d'accès (DSLAM) selon l'une quelconque des revendications 7 ou 8,
**caractérisé en ce que**,
le multiplexeur d'accès (DSLAM) présente des moyens pour le contrôle du déroulement pour le sens de transmission de données en direction du terminal de données (D1, D2, D3), qui comprennent des moyens pour le contrôle d'un tampon d'entrée via l'interface Ethernet, par laquelle le multiplexeur d'accès (DSLAM) est relié au réseau Ethernet (ETH), et des moyens pour le contrôle de l'état de charge de tampons d'émission, qui sont attribués aux lignes d'abonnés numériques (DSL1, DSL2, DSL3), et des moyens pour la sélection et le rejet aléatoires ou ciblés de trames Ethernet.

10. Multiplexeur d'accès (DSLAM) selon la revendication 9,
**caractérisé en ce que**,
le multiplexeur d'accès (DSLAM) présente une logique de commande avec des moyens pour la prévision d'une surcharge du tampon d'émission de la ligne d'abonné numérique (DSL1, DSL2, DSL3) et des moyens pour influencer le tampon de réception pour le rejet de trames Ethernet, qui peuvent être attribués à la ligne d'abonné numérique respective (DSL1, DSL2, DSL3).

11. Multiplexeur d'accès (DSLAM) selon l'une quelconque des revendications 9 ou 10,
**caractérisé en ce que**,
la logique de commande du multiplexeur d'accès (DSLAM) présente des moyens pour l'identification de trames de commande de liaison à l'aide de leurs Ethernet-Header et des moyens pour influencer le tampon de réception, de sorte que des trames de commande de liaison ne sont pas rejetées.
